# EUROPEAN PATENT APPLICATION

(11) **EP 3 258 701 A1**
(43) Date of publication of application: **20.12.2017**
(21) Application number: 16174593.0
(22) Date of filing: 15.06.2016
(51) Int. Cl.: H04N 21/472, H04N 21/61, H04N 21/845

(54) **PLAYBACK OF MULTI-PERIOD MEDIA**

(71) Applicant: THEO Technologies, 3012 Leuven (Wilsele) (BE)
(72) Inventor: Tielemans, Maarten, 3201 Langdorp (BE); Speelmans, Pieter-Jan, 3290 Diest (BE); Tielemans, Steven, 3000 Leuven (BE)
(74) Representative: Plas, Axel Ivo Michel

(57) **Abstract**

According to an embodiment, a method is disclosed for playing in a web page of a browser application multi-period MPEG-DASH based media described in a manifest file comprising the following steps: adding (103) first media from a first period of the MPEG-DASH based media in a first media element of the web page; and playing (109) the first media; and adding (104) second media from a second period of the MPEG-DASH based media in a second media element of the web page; and subsequently, playing (111) the second media in the same position in the web page as the first media such that a seamless transition between the playing the first and second media is obtained.

## Description

### Field of the Invention

The present invention generally relates to the playback of MPEG-DASH based media in a browser application. More particular, it relates to the playback of multi-period MPEG-DASH based media.

### Background of the Invention

MPEG-DASH is an international standard ratified by MPEG and ISO and is described in ISO/IEC 23009-1. DASH stands for Dynamic Adaptive Streaming over HTTP. This way MPEG-DASH provides a vendor independent adaptive streaming technology. In adaptive streaming, a media file is split into different media segments and stored on a content server. The media can then be played back by a client by retrieving the different segments by standard HTTP request and playing the segments one after the other. The media segments are made available on a content server with different characteristics, e.g. by different spatial resolutions or different encoding bit rates. The client can then adapt the playback to changing network conditions or user context by selecting different bitrates or resolutions of the segments.

The temporal and structural relationship between the different segments is described in the Media Presentation Description or MPD file. This XML file can be downloaded by the client before playback of the media. The MPD describes the media in a hierarchical model wherein, at a first level, the media may be divided into separate periods. Media divided into such periods is further referred to as multi-period media. Each period may then contain a description of different media components each subdivided into different media segments. A media component may for example be a video component with a certain characteristic such as codec, bitrate, frame rate, resolution, viewing angle. Other media components are for example audio components or subtitle components. The set of characteristics do not change within a period, i.e., a period comprises a fixed set of media components each available in a fixed set of characteristics. Periods are typically used for inserting different types of media in a media stream, for example for inserting an advertisement which is only available in a single quality without subtitles.

MPEG-DASH is partly supported by some web browser applications, i.e., adaptive streaming media can be played in a media player by referring to the MPD file within a HTML5 media element, e.g., within a <video> or <audio> element depending on the type of media. In other browser applications, MPEG-DASH media is typically played by a combination of JavaScript and HTML5, often referred to as an external player. The necessary code for the external player is then embedded in the web page or referred to from within the web page.

A problem with current web browsers and JavaScript based players or external players is that some of them do not support multi-period media. In some cases, the browser will then only play the first period and then stop the playback. In other cases, the browser may even not play the media at all.

One solution offered by some external players is to load every period separately into the media element and then to reset the media element after every period and reload it with the media of the next period.

A problem with the above solution is that the resetting of the video element is visible for the user as an interruption of the media player, i.e., not only the media but also the media player itself will shortly disappear and then reappear resulting in an unpleasant viewing experience to the user.

### Summary of the Invention

It is an object of the present invention to overcome the above problems and to provide a way to play multi-period MPEG-DASH media in a browser application by the sole use of HTML and JavaScript.

According to a first aspect, this object is achieved by a computer-implemented method for playing in a web page of a browser application multi-period MPEG-DASH based media described in a manifest file. The method comprising the following steps performed in the browser application:
- adding first media from a first period of the MPEG-DASH based media in a first media element of the web page; and
- playing the first media; and
- adding second media from a second period of the MPEG-DASH based media in a second media element of the web page; and
- subsequently, playing the second media in the same position in the web page as the first media such that a seamless transition between the playing the first and second media is obtained.

First media, i.e., media described in a first period of the manifest file or MPD file, is thus played by inserting the media in a media element of the web page. This way, any browser application supporting MPEG-DASH, also the ones that do not support multi-period media, will play the first media. For the second media, i.e., the media in the second period of the MPEG-DASH file, the second media is added to another media element, i.e., the second media element, in the web page. Then, at the end of the first media, the second media element is placed in the same position as the first media element and the first media element is hidden from that position. This way a seamless transition is obtained between the first media and the second media and also between the media player playing the first media and the media player playing the second media. As the media players are in the same position, the transition between the media players will be invisible to a user of the browser application and thus a pleasant user experience is achieved.

Advantageously, the method further comprises buffering the second media before the end of playing the first media.

As a second media element is used for playing the second media, the second media may be buffered before the end of the first media. This way, the second media can start immediately after the first media without interruption. This is not possible when the second media is loaded in the first media element, because the second media can then only be loaded at the end of the first media.

The media for the first and second period may be described in a single static manifest file that is loaded before playing the media. Alternatively, the manifest file may be dynamic, i.e., the manifest file is updated regularly on a server serving the manifest file. In such a case, the description of the second period may not appear together with the description of the first period. Therefore, the method then further comprises reloading the manifest file for retrieving a description of the second period.

According to an embodiment, the method further comprises:
- receiving an external command for playing the first media; and
- by the command, putting the second media element in a state in which it can be played without further command.

Typically, a browser application will only allow to play media in a media element when a playing command is received externally from the web page. Such a command may for example be generated by a user pressing a play button in the web page of by the browser application itself which supports automated playback of media in a webpage. However, when the second media is to be played, it is contained within a second media element and would thus need a second command resulting in an interruption of the playback at the beginning of the second media. This limitation requiring a second playing command is typically present in mobile browser applications. By the above steps, the media element is already instantiated on the web page when the command for playing the first media is received. Therefore, the command is also used to put the this second media element in a state in which it can be played without further command. Then, when the first media is finished playing, the second media can be started without further external command resulting in a transition between the first and second media without interruption.

According to an embodiment, a third period in the manifest file is played by:
- adding third media from a third period of the MPEG-DASH based media in the first media element of the web page; and
- playing the third media.

In other words, the first media element is reused to play the third media from the third period.

Further media from further periods may then be played by:
- alternatingly adding further media from a further period of the MPEG-DASH based media in either the first media element or the second media element of the web page; and
- playing the further media accordingly.

An advantage of alternating between the elements is that regardless of the number of periods, only two elements need to be instantiated. Therefore, also all further media from the further periods can be played without further user interaction.

According to an embodiment the first and second media element are in the same position on the web page and playing the second media further comprises putting the second media element on top of the first media element.

In a web page, media elements and thus the corresponding displayed media players media can be stacked on top of each other. By changing the stacking order of the media elements in the webpage and thus by putting the second media element on top of the first media element a swift and seamless transition is accomplished when changing playback from the first to the second media. Such stacking may further be accomplished by HTML compliant statements.

Furthermore or alternatively, the first and second media element are in the same position on the web page and the playing the second media comprises hiding the first media element.

Media elements may be hidden from a web page by changing a display property of the element to a hidden status. By changing the stacking order of the media elements in the webpage and thus by hiding the first media element a swift and seamless transition is accomplished when changing playback from the first to the second media.

When the first and second media element are then in the same position on the web page, the adding the second media may then comprise hiding the second media element and the playing the second media may then comprise unhiding the second media element.

In other words, the second media element is already in the same position as the first media element from the beginning, but is hidden while the first element is visible. During the transition from the first to the second media, the visibility of the elements is then alternated.

Advantageously, all above steps according to the various embodiments are implemented and performed by HTML5 and JavaScript code. This way an MPEG-DASH multi-period supported media player is obtained without any need for external plugins.

In a first scenario, the above steps can be used when the second period is subsequent to the first period. The playing of the second media is then started at the end of the first media.

In a second scenario, the above step may also be performed when skipping from a playing position in a first period to a playing position in a further or earlier period. Advantageously, the following step are then performed:
- receiving a command to skip to a playing position outside the first period of the MPEG-DASH based media; and
- determining from the manifest file the period comprising the playing position as the second period with the second media; and
- playing the second media at the playing position.

According to a second aspect, the invention relates to a computer program product comprising computer-executable instructions for performing the method according to the first aspect when the program is run on a computer.

According to a third aspect, the invention relates to a computer readable storage medium comprising the computer program product according to the second aspect.

According to a fourth aspect, the invention relates to a data processing system programmed for carrying out the method according to the first aspect.

### Brief Description of the Drawings

Fig. 1 illustrates steps performed by a browser application for playing multi-period media in a web page; and
Fig. 2 illustrates a web application displaying a web page containing video elements according to an embodiment of the invention; and
Fig. 3 illustrates a Media Presentation Description or MPD file as known in the art containing two periods each describing media to be played within a web page.
Fig. 4 illustrates steps for skipping a playing position within multi-period media according to an embodiment of the invention.
Fig. 5 illustrates a suitable computing system for performing steps according to various embodiments of the invention.

### Detailed Description of Embodiment(s)

The present invention relates to the playback of multi-period MPEG-DASH media in a browser application.

MPEG-DASH is an international standard ratified by MPEG and ISO and is described in ISO/IEC 23009-1. DASH stands for Dynamic Adaptive Streaming over HTTP. This way MPEG-DASH provides a vendor independent adaptive streaming technology. In adaptive streaming, a media file is split into different media segments and stored on a content server. The media can then be played back by a client's browser application by retrieving the different segments by standard HTTP request and playing the segments one after the other. The media segments are made available on a content server with different characteristics, e.g. by different spatial resolutions or different encoding bit rates. The client can then adapt the playback to changing network conditions or user context by selecting different bitrates or resolutions of the segments.

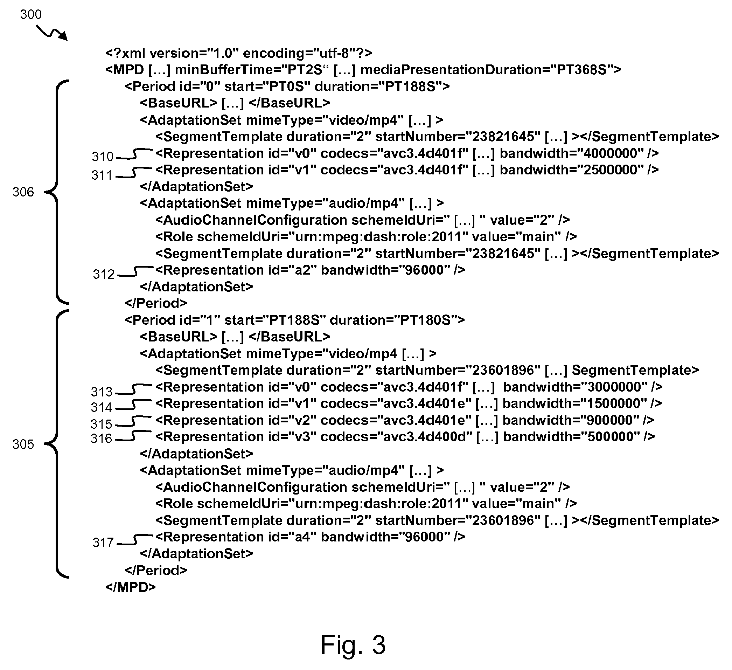

The temporal and structural relationship between the different segments is described in the Media Presentation Description or MPD file. Fig. 3 illustrates a condensed version of such an exemplary MDP file 300. The MPD file 300 is formatted in XML and can be downloaded by the client before playback of the media described therein. The MPD file 300 describes the media in hierarchical model wherein, at a first level, the media may be divided into separate periods 306, 305. Media that is described in a MPD file 300 and that is divided into separate periods 306, 305 is further referred to as multi-period media. In MPD file 300, the first period 306 describes media in a first time interval from zero seconds to 188 seconds, i.e., a total interval of 188 seconds. The second period 305 describes media in a second time interval from 188 seconds for a duration of again 180 seconds. Therefore, in the example of Fig. 3, the second period 305 is subsequent to the first period 306. Each period 306, 305 may then contain a description of different media components 311-317. A media component may for example be a video component with a certain characteristic such as codec, bitrate, frame rate, resolution, viewing angle. Other media components are for example audio components or subtitle components. The set of characteristics do not change within a period, i.e., a period comprises a fixed set of media components each available in a fixed set of characteristics. In the example of Fig. 3, the first period 306 contains two video components 310 and 311 with a respective bandwidth of 4Mbit/s and 2.5Mbit/s and one audio component 312 with a bandwidth of 96Kbit/s; the second period 305 contains four video components 313 till 316 with a respective bandwidth of 3Mbit/s, 1.5Mbit/s, 900Kbit/s and 500Kbit/s and one audio component 317 with a bandwidth of 96Kbit/s. Periods are typically used for inserting different types of media in a media stream, for example for inserting an advertisement which is only available in a single quality without subtitles.

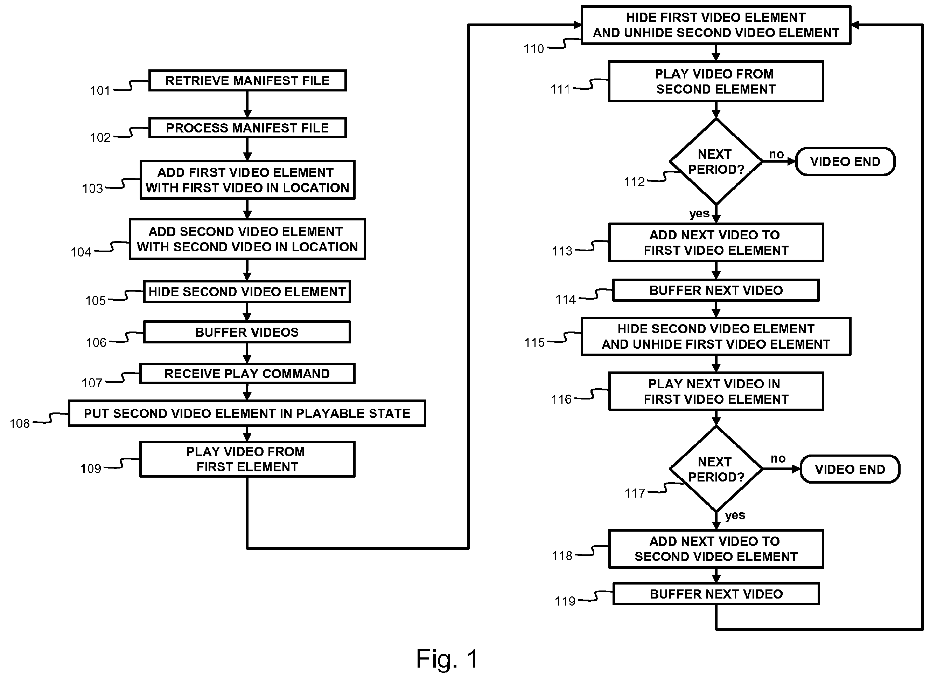

Figure 1 illustrates steps performed within a browser application of a client computing device for playing MPEG-DASH multi-period media according to an embodiment of the invention. The MPEG-DASH multi-period media may for example be the media as described in the MPD file 300 of Fig. 3. The browser application, also referred to as web browser or just browser, is a software application for retrieving, presenting, and traversing information resources on the Internet, a local network or local file system. An information resource is typically identified by a Uniform Resource Identifier, i.e., a URI or URL. Such a URL may for example refer to a web page, image or media such as MPD file 300. Examples of web browsers are Firefox, Internet Explorer, Microsoft Edge, Google Chrome, Opera, and Safari.

The client computing device may be any device capable of running a web browser application such as for example a desktop computer, a laptop computer, a smartphone or a tablet.

The browser application performing the steps of Fig. 1 supports at least the playback of single period MPEG-DASH media, i.e., media represented by a single period or without any subdivision in periods. Media of a first or single period may then be played by enclosing a URL to a MPD file within a media element in a web page, for example by enclosing a link to the media within a <video> or <audio> HTML element. The steps of Fig. 1 may further be delivered as part of the web page to the browser application, for example by JavaScript code embedded in the web page or as a separate file referred to from within the web page. The browser then performs these steps during the loading and/or display of the web page.

In a first step 101, the browser application retrieves a manifest file describing multi-period media such as for example the MPD file 300. The manifest file 300 is then processed in step 102 and the first period of the MPD file 300 is identified. The media described within the first period, i.e., the first media, is then instantiated in the web page by adding 103 the first media into a first HTML media element within a certain location in the web page. Referring back to the example of Fig. 3 video component 310 and audio component 312 may for example be loaded into this first media element. The choice of the bandwidth of the video element may then depend on the network conditions.

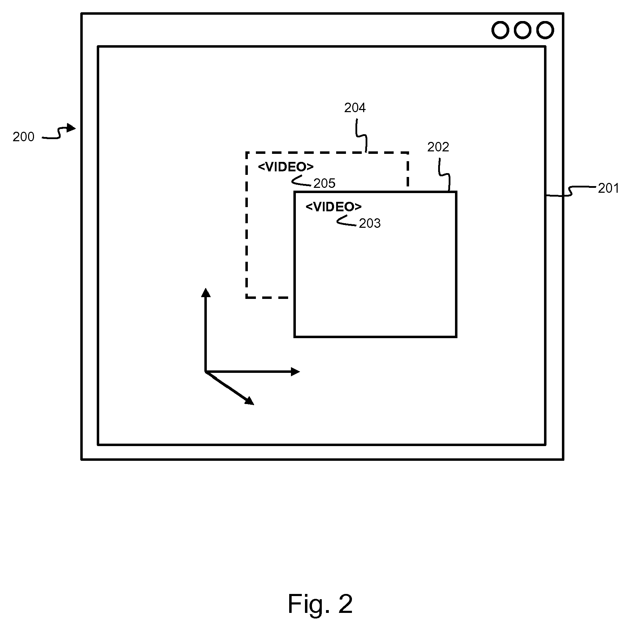

Figure 2 illustrates a browser application window 200 that displays the web page 201. After loading the first media element, a media player 202 comprising video component 310 is displayed within the web page 210 by the browser application upon parsing the first media element 203.

During the processing step 102, also the media in the second period 305 is identified, i.e., the second media. Similarly to step 103, the second media is then added in step 104 to a second media element allowing playback of the second media in the web page. Referring back to the example of Fig. 3 video component 313 and audio component 317 may for example be loaded into this second media element. The choice of the bandwidth of the video component may then depend on the network conditions. The second media element 205 is placed in the same position as the first video element 203 within the web page 201, but, as shown in step 105, is hidden. This way, two media players 202 and 204 are in the same position in the web page but only the first media player 202 is visible.

Different techniques can be used for hiding the second media element 205 and thus the second video player 204. A first technique is by setting the CSS display styling attribute of the second media element 205 to 'hidden'. A second technique is by overlaying the first media element 203 on top of the second media element 205, i.e., by stacking the media elements 204, 205 on top of each other. Also the overlaying may be implemented by setting the appropriate CSS properties.

After adding the media elements, the browser application may start buffering the first and/or second media. This guarantees an immediate playback when the media is started or when switching from the first to the second media.

Typically, when a web page is loaded, media will not start playing the media immediately or automatically unless this is allowed by the browser application. If automatic playback is not supported, the browser application will receive a play command at step 107, for example from a user clicking a play icon within the first media player 202.

When the playing command is received, the first media 203 in the first media player 202 is started in step 109. At the same time, the second media in the second media player is put in a playable state. This is done by linking the play command to both the first and second media element. By putting the second media player in a playable state, the second media can be started later on without needing any further playing command from a user. Putting the second player in a playable state may for example be done by issuing a play command to the second player and then directly pausing the second player.

At the end of the first video, the visibility of the first and second media players 202 and 204 is switched in step 110. This may for example be done by setting the visibility of the first media element to 'hidden' and by setting the visibility of the second media element to 'visible'. Another possibility is to switch the stacking order of the two media elements. At the same time, the playback of the second media in the second media element is started.

By the switching between the first and second media element, a seamless transition is achieved between the first and second media. Furthermore, as only single period media is played in the media elements, the browser application does not need to support multi-period playback.

A media stream may also be divided into more than two periods. The remaining steps 112-119 in Fig. 1 illustrate a further embodiment for the generic case where the manifest file comprises more than two periods.

When the second media has started, the method proceeds to step 112 and verifies whether another period is present in the manifest file 300. If not, the playback of the media ends at the end of the second media. If there is a further period, the method proceeds to step 113 and adds the media from the next period back to the first media element, just as was done in step 103. Optionally, buffering of this next media can already be started in the next step 114.

Then, at the end of the playback of the second media, the visibility of the first and second media element is switched back in step 115 and the playback of the next media is started in step 116 similar to steps 110 and 111.

During the playback of the next media, the browser checks again if a further period is present in the manifest file under step 117. If not, the playback of the media is stopped. If a next period is present, the media from this next period is added to the next available element, i.e., the second media element. Then, optionally, the media is buffered in step 118 and finally the method returns back to step 110 in order to switch the visibility of the media elements and to play the media from the second media element at the end of the media in the first media element.

By the above steps, media divided into several separate periods in a manifest file can be played seamlessly in a browser application. As the method uses the same media elements that were created at the beginning, there is no need for any user interaction, i.e., a playing command, to start the playback of media of another period.

According to the embodiment as illustrated in Fig. 1, all periods 305, 306 are specified in the same manifest file 300. According to an alternative embodiment, the periods may also be specified dynamically. In such a case, one or more periods are specified in a manifest file upon loading the web page. Then, at a certain point in time, the manifest file is refreshed, i.e., a new version of the manifest file is downloaded. This new version then specifies further periods of the media stream which can be played according to the steps of Fig. 1. The reloading of the manifest file may for example be done during or at the end of the playback of a certain period, i.e., after step 109, 116

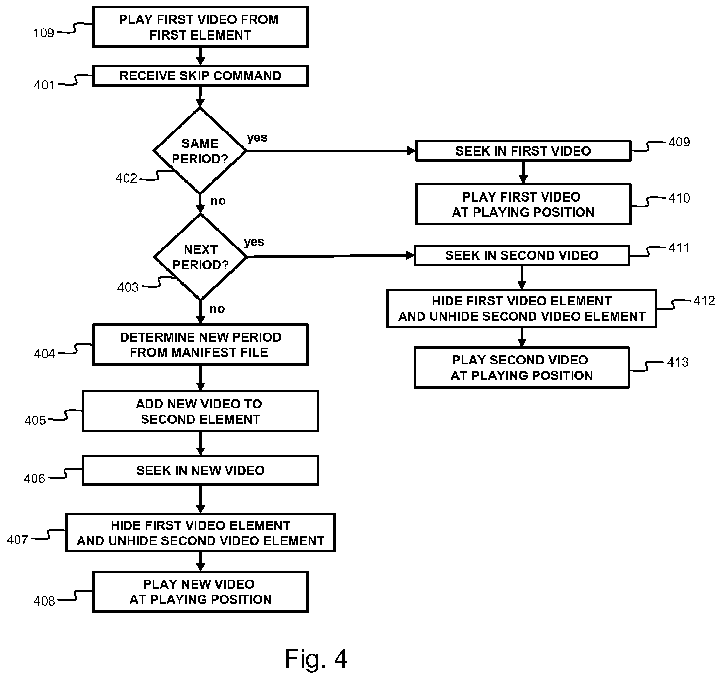

During the playback of the media in the browser application according to the above steps, a user may at any time perform a skipping action on the media player. Fig. 4 illustrates as an example steps performed by the browser application when such a skipping action occurs during the playback of the first media from the first media element. Similar steps may be performed when the skipping action is performed during playback of any media from any media element.

During the playback 109 of the first video from the first media element, at a certain moment, the browser application receives in step 401 a skipping command to skip the media to a certain playing position. This command may for example be generated by a user interaction on the display. Then, in step 402, it is checked whether this playing position lays within the same period of the currently played media. If so, the method proceeds to step 409 and seeks the playing position within the same period. Thereupon, the first video is played at the playing position within the same media element in step 410.

If the playing position is not in the same period, the method proceeds to step 403 and checks whether the playing position is within the next period i.e., the period following the currently played period, for which the media is already prepared in the second media element. If so, the method proceeds to step 411 and seeks the playing position in the media in the second media element. Then, similarly to step 110 of Fig. 1, the visibility of the first and second media element is switched in step 412 and, subsequently, the media in the second media element is played at the playing position.

If the playing position is not within the period of the other media element, the method proceeds to step 404 and determines from the manifest file the new period containing the playing position. This may be an earlier period or a later period. When the new period is determined, the new media for the new period is determined from the manifest file and, in step 405, added to the second media element. By this adding already loaded media in the second media element may be replaced by the new media. Then, in step 406, the playing position is seeked within the new media similar to step 411. Thereafter in step 407 and 408, similar to steps 412 and 413, the visibility of the media elements is switched and the new media is played at the playing position.

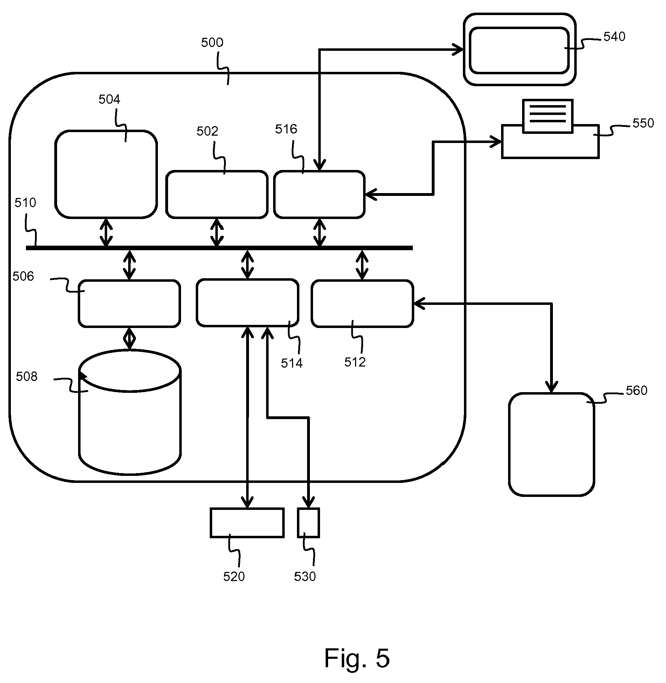

Fig. 5 shows a suitable computing system 500 for performing the steps according to the above embodiments. Computing system 500 may be used as client device that runs the browser application. Computing system 500 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example one or more Ethernet interfaces that enables computing system 500 to communicate with other devices and/or systems 560. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Computer-implemented method for playing in a web page (201) of a browser application (200) multi-period MPEG-DASH based media described in a manifest file (300) comprising the following steps performed in the browser application:
- adding (103) first media (301, 302) from a first period (306) of the MPEG-DASH based media in a first media element (203) of the web page; and
- playing (109) the first media; and
- adding (104) second media (303, 304) from a second period (305) of the MPEG-DASH based media in a second media element (205) of the web page; and
- subsequently, playing (109) the second media in the same position in the web page (201) as the first media such that a seamless transition between the playing the first and second media is obtained.

2. The method according to claim 1 wherein the method further comprises reloading the manifest file for retrieving a description of the second period.

3. Method according to claim 1 or 2 further comprising:
- buffering (106) the second media (303, 304) before the end of playing the first media (301, 302).

4. Method according to any one of the preceding claims further comprising:
- receiving (107) an external command for playing the first media (301, 302); and
- by the command, putting (108) the second media element (205) in a state in which it can be played without further command.

5. Method according to any one of the preceding claims further comprising:
- adding (113) third media from a third period of the MPEG-DASH based media in the first media element (203) of the web page; and
- playing (116) the third media.

6. Method according to any one of the preceding claims further comprising:
- alternatingly adding (113, 118) further media from a further period of the MPEG-DASH based media in either the first media element (203) or the second media element (205) of the web page; and
- playing (116, 111) the further media accordingly.

7. Method according to any one of the preceding claims wherein the first and second media element (203, 205) are in the same position on the web page (201) and wherein playing the second media comprises putting the second media element on top of the first media element.

8. Method according to any one of the preceding claims wherein the first and second media element (203, 205) are in the same position on the web page (201) and wherein playing the second media comprises hiding the first media element.

9. Method according to any one of the preceding claims wherein the first and second media element (203, 205) are in the same position on the web page (201) and wherein adding the second media comprises hiding the second media element; and wherein playing the second media comprises unhiding the second media element.

10. Method according to any one of the preceding claims wherein the steps are implemented and performed by HTML5 and JavaScript code.

11. Method according to any one of the preceding claims further comprising:
- receiving (401) a command to skip to a playing position outside the first period of the MPEG-DASH based media; and
- determining (404) from the manifest file the period comprising the playing position as the second period with the second media; and
- playing (408) the second media at the playing position.

12. A computer program product comprising computer-executable instructions for performing the method according to any one of claims 1 to 11 when the program is run on a computer.

13. A computer readable storage medium comprising the computer program product according to claim 12.

14. A data processing system programmed for carrying out the method according to any one of claims 1 to 11.
